# EUROPEAN PATENT SPECIFICATION

(11) **EP 0 646 456 B1**
(45) Date of publication and mention of the grant of the patent: **21.01.1998**
(21) Application number: 93830391.4
(22) Date of filing: 24.09.1993
(51) Int. Cl.: B32B 31/00

(54) **A plastic coating machine for the dustless joining of paper or cardboard with a transparent film by means of solvent-free adhesives (m)**
Maschine zum staubfreien Überziehen von Papier oder Karton mit einem transparenten Film mit Hilfe von lösungsmittelfreien Klebstoffen
Dispositif de revêtement plastique pour joindre du papier ou du carton à l'aide d'un film transparent au moyen d'adhesifs sans solvant , de façon à éviter les poussières

(43) Date of publication of application: 05.04.1995
(73) Proprietor: CENTROPLAST SUD S.r.l., Pomezia (Roma) (IT)
(72) Inventor: Rossetti, Renzo, Roma (IT)
(74) Representative: Sarpi, Maurizio

(56) References cited:
- EP-A- 0 040 843
- EP-A- 0 401 513
- EP-A- 0 443 298
- DE-A- 3 926 567
- GB-A- 2 223 445
- US-A- 3 930 930
- US-A- 5 160 399

## Description

The present invention relates to a machine for automatically applying a transparent film generally of polypropylene to a face of a paper substrate (paper or cardboard) in the form of single sheets or a continuos band.

The above-mentioned operation well-known to those skilled in the art under the name of "plasticization" finds a number of applications in several fields above all in the publishing trade and in the manufacture of paper and cardboard articles, and the spread thereof is due to the greatest extent to the improvement of the aesthetic and functional features of the paper material such as gloss, moisture-repellent capability, tearing strength, and scuffing resistance.

In a previous European Patent No. 443 298 of the same Applicant there is described and illustrated a plasticizer machine which couples a transparent film to a paper substrate without using any solvent, which avoids all troubles relative to the presence of said solvent such as the need of an evaporation tunnel, suction and filtering systems, hot air generators, and generally all technical measures aimed at avoiding or at least reducing pollution and fire risks.
The present invention seeks to further improve the construction and the operation of the machine described in the European Patent Application mentioned above, without prejudice to the inventive steps of the latter.
In particular, the present invention seeks to solve definitively the problem of the presence of dusts used to avoid setoff in a plasticizer machine which couples a plastic film to a printed paper substrate in the form of single sheets or a coil by means of a solventless adhesive.
As known to those skilled in the art, under the term means to avoid setoff there is intended the dusts of generally vegetal origin which are normally used in typography to avoid setoff, i.e. the print that the freshly printed pages leaves on the sheets brought into contact therewith.
However, the use of such dusts influences negatively the plasticization because it is quite easy that an amount of grains is adherent to the sheet until the coupling to the plastic film, with the quite unaesthetic result that the plasticized product is spotted and dirty.
A number of approaches have been made to avoid such trouble, however, without any satisfying result. For example, several mechanical cleaning devices using brushes or cleaning contact rollers are known such as the British patent GB-A-2 223 445 where the dusts adhering to the surface of the sheet is removed by a cleaning roller coated with rubber which in turn gives it to a cylindrical brush.
Such devices, however, are not able to guarantee the complete removal of the dusts to avoid setoff, as requested.

The Applicant has surprisingly found that in a plasticizer machine of the type mentioned above, i.e. operating with a solventless adhesive, dusts to avoid setoff are completely removed at the output of the station for coupling the transparent film and the paper substrate, and the plasticization is perfect, i.e. free of dirt and spots, if the surface of the printed sheet to be coupled to the plastic film and/or the face of the plastic film already coated with the solventless adhesive, before the glazing, i.e. upstream of the above-mentioned coupling station, is wetted with water or with a suitable water solution.
In other words, it was experimentally found that dusts to avoid setoff are completely removed if during the glazing an amount of water or a suitable water solution is present at the interface between plastic film already coated with the adhesive and printed sheet. Under suitable water solution it is meant any water solution which is colourless, odourless, and does not change the chemical physical composition of the printing ink used as well as is not a solvent for such ink and does not react with the plastic film (typically polyethylene).

Therefore, according to the invention there is provided a plasticizer machine for applying a transparent film to a paper substrate by means of solventless adhesives, comprising a portal construction formed of two columns or uprights connected by a horizontal raised beam; a paper substrate feeding assembly aligned with said portal construction; a reel for feeding the transparent film; an adhesive spreading roller assembly for applying an evenly distributed controlled amount of solventless adhesive to a face of the film, and a set of guide rollers; said reel, spreading roller, and guide rollers being housed in the first upright or column; a set of rollers rotatably mounted on the horizontal raised beam, for transporting the film with the adhesive face oriented upwards from the first column or upright to the second column or upright; means for passing the film downwards along the second column or upright; and coupling rollers housed in the second column or upright for coupling the film to a paper substrate formed of single sheets or a continuous strip; further comprising an engraving, cutting and tearing assembly for the plasticized sheets, which assembly is aligned with the longitudinal axis of the machine and housed under said horizontal raised beam and between the first and second columns or uprights; and a means for wetting with water or a water solution the face of the film carrying the adhesive and/or the printed surface of said paper substrate so that any dust to avoid setoff on said printed surface of the paper substrate can be removed, said means being located before the coupling rollers.

According to a first embodiment, after coating with an adhesive and before the coupling station, the plastic film passes between a bearing roller and a wet roller which supplies water by contact with its adhesive surface.
According to a second embodiment the paper substrate is wetted in a discrete manner by an atomizer located upstream of the coupling station.
According to a third embodiment there is provided an atomizer capable of wetting both the printed face of the paper substrate and the face coated with the plastic film.

This invention will now be described in detail with reference to the accompanying drawings in which by way of example:
Fig. 1 shows schematically the plasticizer machine in longitudinal section;
Fig. 2 shows a device to avoid setoff with a wetting contact roller;
Fig. 3 shows an atomising device for the paper substrate.

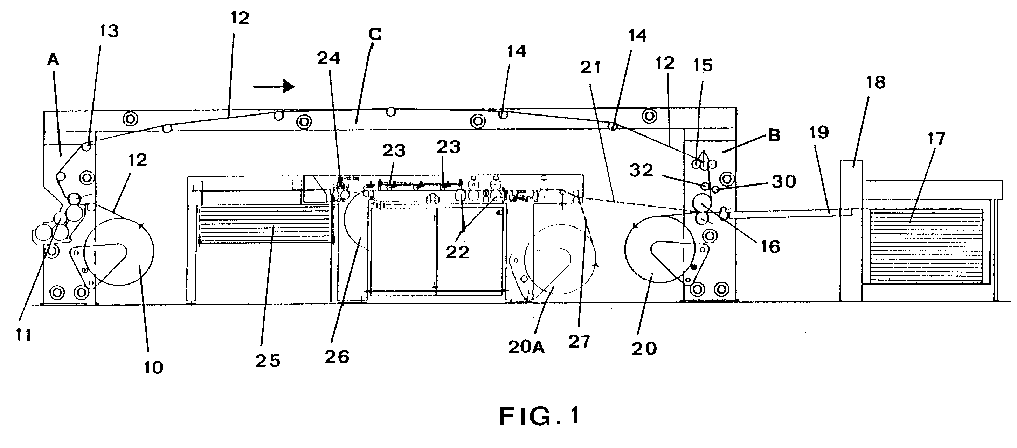

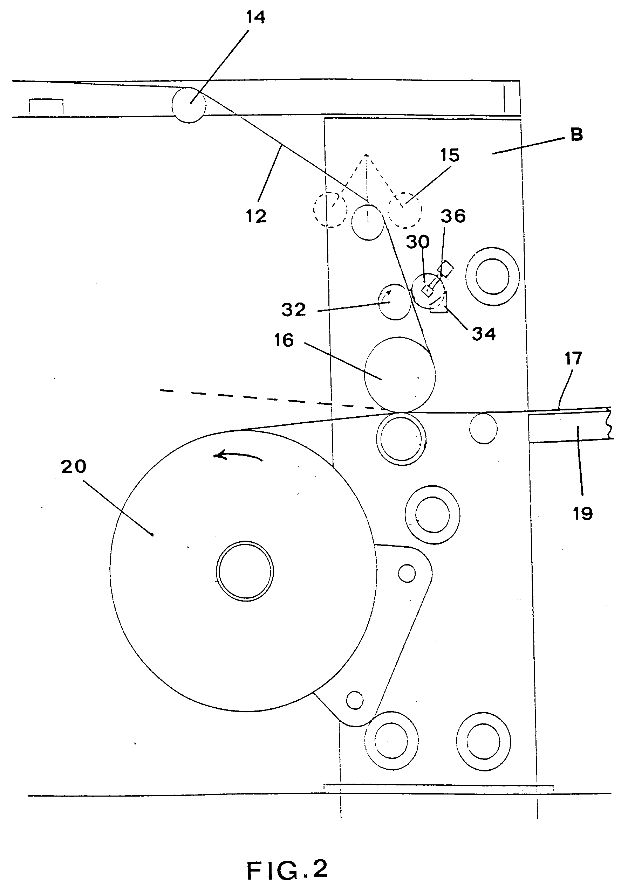

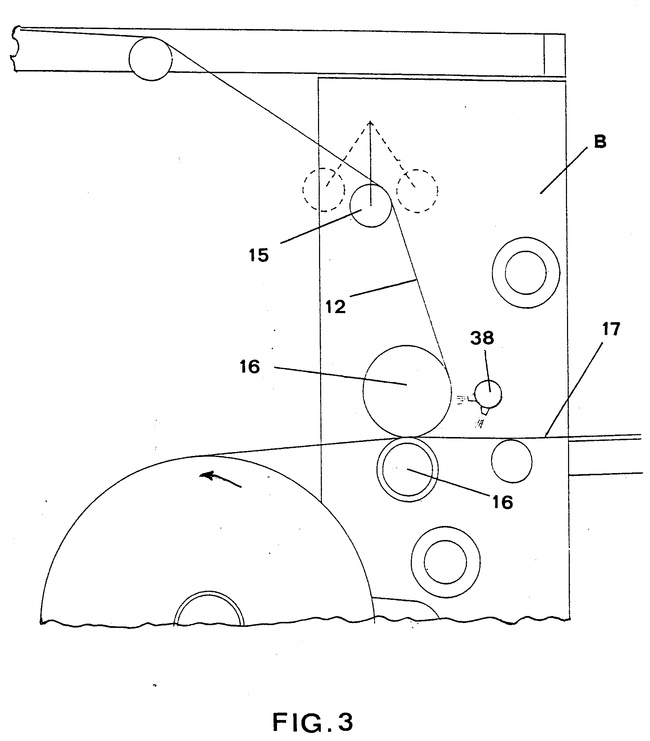

Referring to Fig. 1 the plasticizer machine generally consists of a portal-shaped framework comprising a pair of uprights A and B connected by a horizontal raised beam C.
At the base of upright or column A there is located the interchangeable reel 10 of transparent film which is continuously unwound at controlled rate according to the direction indicated by the arrow. Located downstream of reel 10 is a roller assembly 11 for coating the solventless adhesive which is not described in detail because it is known and protected by another patent.
Transparent film 12 having a face coated with said adhesive downstream of coating assembly 11 is passed on guide rollers 13 carried by column A and successively on bearing rollers 14 carried by horizontal raised beam C. In the horizontal path the adhesive is dried for a suitable setting. After the end of the horizontal path, the transparent film 12 with the upper face evenly coated with adhesive ready to set is passed about tension control rollers 15 (dandy rolls) and runs downwards along column B up to the wetting device for removing the dusts to avoid setoff.
In the embodiment of Fig. 2 the film is passed through a pair of opposed rollers 30, 32, the first of which is a wetting contact roller of foam or rubber material which is wetted with the water of cup 34 during its rotation. The second bearing roller 32 may be omitted if wetting roller 30 is placed so as to come into contact with the coated face of the plastic film when the opposite face of the latter is already in contact with upper coupling roller 16. Advantageously the position of the wetting roller can be controlled by an adjusting screw 36.
From the wetting device the plastic film reaches coupling rollers 16 which apply the plastic film to the paper substrate. The latter can be formed of single sheets or a continuous band wound to a reel.
In case of single sheets, the pile of sheets 17 is put by feeder 18 on line with the machine, and the single sheets taken out in succession slide on plane 19 and pass between coupling rollers 16 already described above. Downstream of said rollers there is a take up reel 20 around which the succession of sheets 17 are passed with their transversal edges overlapped each other by a very short length, said sheets being continuously and evenly coated by the transparent film. The short overlap serves to avoid that the film with the adhesive comes in touch with the lower coupling roller of coupling roller assembly 16.
In alternative to the already described wetting device of Fig. 2 operating with the plastic film there can be provided at the input of the coupling rollers 16 an atomizer 38 capable of supplying a spray of water or a water solution to the face of the paper substrate 17 (Fig. 3). It is self-evident that the spray can also reach the plastic film if the atomizer is provided with swivel nozzles.
According to an alternative embodiment of the present invention, downstream of said coupling rollers the continuous strip of transparent film coupled to sheets 17 can conversely run directly along the path shown by broken line 21 and can be fed to an engraving, cutting and tearing assembly which is advantageously located within the portal under the horizontal beam C. In this way there is no increase of space occupied by the apparatus and only one operator at the control panel can control the same.
The engraving, cutting and tearing assembly includes a set of guide rollers 22, pressure rollers 23, and an engraving and cutting means 24 dividing the continuos strip into single sheets which are automatically piled up into the stacker 25. The defective sheets are separated by baffle plate 26 and rejected.
The separation of the plasticized sheets directly at the output of the coupling rollers can be made by using specific adhesives of suitable features, i.e. capable of preventing any sliding of the substrate relative to the transparent film after the end of the path shown by broken line 21.
Alternately, take up reel 20 can be periodically removed from column B of the machine and mounted at 20A at the base of the engraving, cutting and tearing assembly in order to supply such assembly with the paper substrate along the path shown by the dashed line 27.
From the foregoing, besides the advantages indicated in the above description also the following features are self-evident:
- Little space occupied as well as low purchase and running costs;
- Versatility and very high production rate;
- High quality production standard with removal of unwanted dirt as well as possibility of installing the machine in any room according to the safety and health rules in force due to the elimination of solvents;
- No acoustic and environmental pollution.

## Claims

1. A plasticizer machine for applying a transparent film to a paper substrate by means of solventless adhesives, comprising a portal construction formed of two columns or uprights (A,B) connected by a horizontal raised beam (C); a paper substrate feeding assembly aligned with said portal construction; a reel (10) for feeding the transparent film (12); an adhesive spreading roller assembly (11) for applying an evenly distributed controlled amount of solventless adhesive to a face of the film (12), and a set of guide rollers (13); said reel, spreading roller, and guide rollers being housed in the first upright or colums (A); a set of rollers (14) rotatably mounted on the horizontal raised beam, for transporting the film with the adhesive face oriented upwards from the first column or upright to the second column or upright; means (15) for passing the film downwards along the second column or upright; and coupling rollers (16) housed in the second column or upright for coupling the film to a paper substrate formed of single sheets or a continuous strip, characterized by further comprising an engraving, cutting and tearing assembly (22,23,24) for the plasticized sheets, which assembly is aligned with the longitudinal axis of the machine and housed under said horizontal raised beam and between the first and second columns or uprights; and means (30-32,38) for wetting with water or a water solution the face of the film carrying the adhesive and/or the printed surface of said paper substrate so that any dust to avoid setoff on said printed surface of the paper substrate can be removed, said means being located before the coupling rollers (16).

2. The machine of claim 1 , characterized in that said wetting means includes at least a roller (30) wetted with water or a water solution and located so as to wet by contact said face of the film carrying the adhesive.

3. The machine of claims 1 and 2, characterized in that said wetting means includes an atomizer (38) capable of spraying the printed surface of the paper substrate.

4. The machine of claims 1 to 3, characterized in that the coupling operation is performed by a pair of rollers (16) located downstream of a set of tension adjusting rollers (15) located on the second upright (B).

5. The machine of claims 1 to 4, characterized in that the the paper substrate is piled up in single sheets placed in an automatic sheet feeder (18) located beside the second column (B) in line with the machine and intended to feed in succession the sheets to said coupling rollers (16).

6. The machine of claims 1 to 5, characterized in that the continuous film band applied to said succession of sheets by the coupling rollers (16) is directly fed to the engraving, cutting and tearing assembly (22,23,24) located under the raised beam (C).

7. The machine of claims 1 to 6, characterized in that said engraving, cutting and tearing assembly includes pressure rollers (23), drive and guide rollers (22), and a cutting assembly (24) which cuts the plasticized sheets and feeds them to an automatic stacker (25).

8. The machine of claims 1 to 7, characterized in that the continuos film band with the sheets applied in succession is taken up onto a reel (20A) which in turn can be located on a support shaft mounted in said engraving, cutting and tearing assembly (22,23,24).

9. The machine of claims 1 to 8, characterized in that the engraving, cutting and tearing assembly is provided with a baffle plate (26) to reject any defective sheet before the final piling up.

## Patentansprüche

1. Plastifizierungsmaschine zum Aufbringen eines transparenten Films auf ein Papiersubstrat mittels lösungsmittelfreier Kleber, die folgendes aufweist: eine Portalkonstruktion aus zwei Säulen oder Pfosten (A, B), die durch einen horizontalen, angehobenen Träger (C) verbunden sind; eine Papiersubstratzuführungsanordnung, die mit der Portalkonstruktion ausgerichtet ist; eine Rolle (10) zum Zuführen des transparenten Films (12); eine Kleberstreichwalzenanordnung (11) zum Aufbringen einer gleichmäßig verteilten, kontrollierten Menge von lösungsmittelfreiem Kleber auf eine Seite des Films (12) sowie einen Satz von Führungswalzen (13); wobei die Rolle, die Streichwalze und die Führungswalzen in dem ersten Pfosten oder der Säule (A) untergebracht sind; einen Satz von Walzen (14), die in dem horizontalen, angehobenen Träger drehbar angebracht sind, um den Film mit der nach oben orientierten Klebeseite von der ersten Säule oder dem Pfosten zu der zweite Säule oder dem Pfosten zu transportieren; Mittel (15), um den Film nach unten entlang der zweiten Säule oder dem Pfosten zu führen; sowie Kopplungswalzen (16), die in der zweiten Säule oder dem Pfosten untergebracht sind, um den Film mit einem Papiersubstrat zu koppeln, das aus einzelnen Bögen oder einem kontinuierlichen Streifen gebildet ist, dadurch gekennzeichnet, daß sie ferner eine Präge-, Schneid- und Reißanordnung (22, 23, 24) für die plastifizierten Bögen aufweist, die mit der Längsachse der Maschine ausgerichtet und unter dem horizontalen, angehobenen Balken sowie zwischen der ersten und der zweiten Säule bzw. den Pfosten untergebracht ist; sowie eine Einrichtung (30-32, 38) zum Benetzen der Seite des Films, die den Kleber trägt, und/oder der gedruckten Fläche des Papiersubstrats mit Wasser oder einer Wasserlösung, so daß jeglicher Staub entfernt wird, um einen VerSatz auf der bedruckten Fläche des Papiersubstrats zu vermeiden, wobei die Einrichtung vor den Kopplungswalzen (16) angeordnet ist.

2. Maschine nach Anspruch 1, dadurch gekennzeichnet, daß die Benetzungseinrichtung wenigstens eine Walze (30) aufweist, die mit Wasser oder einer Wasserlösung benetzt und derart angeordnet ist, daß die Seite des Films, die den Kleber trägt, durch Kontakt benetzt wird.

3. Maschine nach Anspruch 1 und 2, dadurch gekennzeichnet, daß die Benetzungseinrichtung einen Zerstäuber (38) umfaßt, der die gedruckte Fläche des Papiersubstrats besprühen kann.

4. Maschine nach den Ansprüchen 1 bis 3, dadurch gekennzeichnet, daß die Kopplungsoperation von zwei Walzen (16) durchgeführt wird, die unterhalb eines Satzes von Spannungseinstellwalzen (15) angeordnet sind, die an dem zweiten Pfosten (B) angeordnet sind.

5. Maschine nach den Ansprüchen 1 bis 4, dadurch gekennzeichnet, daß das Papiersubstrat in einzelnen Bögen aufgestapelt ist, die in einer automatischen Bogenzufuhreinrichtung (18) liegen, die neben der zweiten Säule (B) in Reihe mit der Maschine angeordnet ist und die Bögen nacheinander den Kopplungswalzen (16) zuführen soll.

6. Maschine nach den Ansprüchen 1 bis 5, dadurch gekennzeichnet, daß das kontinuierliche Filmband, das von den Kopplungswalzen (16) nacheinander auf die Bögen aufgebracht wird, direkt der Präge-, Schneid- und Reißanordnung (22, 23, 24) zugeführt wird, die unter dem angehobenen Balken (C) angeordnet ist.

7. Maschine nach den Ansprüchen 1 bis 6, dadurch gekennzeichnet, daß die Präge-, Schneid- und Reißanordnung Druckwalzen (23), Antriebs- und Führungswalzen (22) sowie eine Schneidanordnung (24) aufweist, die die plastifizierten Bögen schneidet und einem automatischen Stapler (25) zuführt.

8. Maschine nach den Ansprüchen 1 bis 7, dadurch gekennzeichnet, daß das kontinuierliche Filmband mit den nacheinander behandelten Bögen auf eine Rolle (20A) aufgenommen wird, die ihrerseits an einer Stützwelle angeordnet sein kann, die in der Präge-, Schneid- und Reißanordnung (22, 23, 24) angebracht sein kann.

9. Maschine nach den Ansprüchen 1 bis 8, dadurch gekennzeichnet, daß die Präge-, Schneid- und Reißanordnung mit einer Ablenkplatte (26) versehen ist, um jeden fehlerhaften Bogen vor dem endgültigen Aufstapeln zurückzuweisen.

## Revendications

1. Machine d'application de revêtement plastique pour appliquer un film transparent sur un substrat de papier au moyen d'adhésif sans solvant, comprenant : une structure en portique formée de deux colonnes ou de deux montants (A,B) reliés par une poutrelle horizontale en hauteur (C), un ensemble d'alimentation en substrat de papier aligné avec ladite structure en portique, une bobine (10) pour amener le film transparent (12), un ensemble de rouleaux de distribution d'adhésif (11) pour appliquer une quantité contrôlée régulièrement dispersée d'adhésif sans solvant sur une face du film (12), et une série de rouleaux de guidage (13), ladite bobine, ledit rouleau de distribution, et lesdits rouleaux de guidage étant logés dans le premier montant ou dans la première colonne (A), une série de rouleaux (14) montés rotativement sur la poutrelle horizontale en hauteur pour transporter le film, dont la face adhésive est orientée vers le haut, depuis la première colonne ou le premier montant jusqu'à la seconde colonne ou jusqu'au second montant, un moyen (15) pour faire aller le film vers le bas le long de la seconde colonne ou du second montant, et des rouleaux d'accouplement (16) logés dans la seconde colonne ou dans le second montant pour accoupler le film à un substrat de papier formé à partir de feuilles uniques ou d'une bande continue, caractérisée en ce qu'il comprend en outre, un ensemble à graver, à découper et à déchirer (22, 23, 24) destiné aux feuilles revêtues de plastique, lequel ensemble est aligné avec l'axe longitudinal du dispositif et est logé sous la poutrelle horizontale en hauteur et entre les premières et secondes colonnes ou les premiers et seconds montants ; et un moyen (30, 32, 38) pour humidifier au moyen d'eau ou d'une solution d'eau la face du film portant l'adhésif et destinée à la surface imprimée dudit substrat de papier, de façon que toute poussière puisse être enlevée, pour éviter la maculation de ladite surface imprimée du substrat de papier, ledit moyen étant situé avant les rouleaux d'accouplement (16).

2. Machine selon la revendication 1, caractérisée en ce que ledit moyen d'humidification comprend au moins un rouleau (30) humidifié par de l'eau ou par une solution d'eau et qui est situé de manière à humidifier par contact ladite face du film portant l'adhésif.

3. Machine selon la revendication 1 et 2, caractérisée en ce que ledit moyen d'humidification comprend un atomiseur (38) capable de pulvériser sur la surface imprimée du substrat de papier.

4. Machine selon les revendications 1 à 3, caractérisée en ce que l'action d'accouplement est accomplie par une paire de rouleaux (16) située en aval d'une série de rouleaux de réglage de tension (15) situés sur le second montant (B).

5. Machine selon les revendications 1 à 4, caractérisée en ce que le substrat de papier est empilé pour former des feuilles uniques mises en place dans un dispositif d'alimentation automatique en feuilles (18) situé derrière la seconde colonne (B), aligné avec le dispositif et conçu pour alimenter successivement les feuilles vers lesdits rouleaux d'accouplement (16).

6. Machine selon les revendications 1 à 5, caractérisée en ce que la bande de film continue appliquée à la dite succession de feuilles au moyen des rouleaux d'accouplement (16) est amenée directement vers l'ensemble à graver, à découper et à déchirer (22, 23, 24) situé sous la poutrelle en hauteur (C).

7. Machine selon les revendications 1 à 6, caractérisée en ce que ledit ensemble à graver, à découper et à déchirer comprend des rouleaux de pression (23), des rouleaux d'entraînement et de guidage (22) et un ensemble de coupe (24) qui coupe les feuilles revêtues de plastique et les amène jusqu'à un dispositif automatique d'empilage (25).

8. Machine selon les revendications 1 à 7, caractérisée en ce que la bande de film continue comportant les feuilles appliquées successivement est saisie sur une bobine (20A), laquelle à son tour peut être située sur un arbre de support monté dans ledit ensemble à graver, à découper et à déchirer, (22, 23, 24).

9. Machine selon les revendications 1 à 8, caractérisée en ce que l'ensemble à graver, à découper et à déchirer est pourvu d'une plaque déflectrice (26) pour rejeter toute feuille défectueuse avant l'empilage final.
